# EUROPÄISCHE PATENTSCHRIFT

(11) **EP 1 498 504 B1**
(45) Veröffentlichungstag und Bekanntmachung des Hinweises auf die Patenterteilung: **20.08.2014**
(21) Anmeldenummer: 04103291.3
(22) Anmeldetag: 12.07.2004
(51) Int. Cl.: C22C 21/00, C22C 19/00

(54) **Aluminiumbasierte multinäre Legierungen und deren Verwendung als wärme- und korrosionsschützende Beschichtungen**
Multinary aluminium based alloys and their use as thermal and corrosion protecting coating
Alliages à base d'aluminium multinairs et leurs utilisation pour les couches protectrices contre chaleur et corrosion

(30) Priorität: 16.07.2003 DE 10332420
(43) Veröffentlichungstag der Anmeldung: 19.01.2005
(73) Patentinhaber: Alstom Technology Ltd, 5400 Baden (CH)
(72) Erfinder: Kaiser, Anton, 8180, Bülach (CH); Shklover, Valery, 8057, Zürich (CH); Steurer, Walter, 8006, Zürich (CH); Vjunitsky, Ivan Victor, 8051, Zürich (CH)

(56) Entgegenhaltungen:
- US-A- 4 980 244
- US-A1- 2002 197 502
- US-B1- 6 306 524
- US-B1- 6 554 920
- HARTE A S ET AL: 'Comparison of modelled and experimental data for the NixRu1-xAl intermetallic compound in the Ni-Ru-Al ternary system' ADVANCES IN X-RAY ANALYSIS Bd. 39, 01 Januar 1997, Seiten 747 - 753, XP009146288 ISSN: 0376-0308
- WOLFF I M ET AL: "Mechanical properties of Ru-Ni-Al alloys", METALLURGICAL AND MATERIALS TRANSACTIONS A: PHYSICAL METALLURGY & MATERIALS SCIENCE, ASM INTERNATIONAL, MATERIALS PARK, OH, US, vol. 27A, no. 5, 1 January 1996 (1996-01-01), pages 1395-1400, XP009146279, ISSN: 1073-5623, DOI: 10.1007/BF02649876

## Beschreibung

### TECHNISCHES GEBIET

Die vorliegende Erfindung betrifft Legierungen, insbesondere zur Verwendung als wärme- und korrosionsschützende Beschichtungen, gegebenenfalls in Kombination mit andersartigen Schichten, von Bauteilen, welche hohen Temperaturen und korrosiven Gasen ausgesetzt sind. Ausserdem betrifft die vorliegende Erfindung Verfahren zur Herstellung von Beschichtungen aus derartigen Legierungen insbesondere auf Substraten aus Superlegierungen sowie die Verwendung von derartigen Beschichtungen insbesondere für die Beschichtung von Bauteilen von Gasturbinen oder Düsentriebwerken.

### STAND DER TECHNIK

Eine Vielzahl von Arbeiten hat sich mit der Untersuchung der thermodynamischen Stabilität, der mechanischen Eigenschaften sowie der Korrosionswiderstandsfähigkeit der Al-Ru und Al-Ni-Ru B2-Legierungen befasst. Die B2-Phase ist eine geordnete kubische Phase AB, bei welcher die A-Atome an den Ecken der Einheitszelle angeordnet sind und die B-Atome im Zentrum der Einheitszelle (cP2 - CsCl-Strukturtyp). B2 Al-Ru ist eine thermodynamisch stabile Phase, welche kongruent bei der sehr hohen Temperatur von 2050°C schmilzt (vergleiche dazu Massalski T.B. (Herausgeber), Binary alloy phase diagrams, 2nd edition OH: ASM International, (1990), 1, 203) und enthält einen beachtlichen Anteil von Aluminium, welches notwendig ist, um die vor Oxidation schützende Schicht von Aluminiumablagerungen zu bilden. Überraschend gute mechanische Eigenschaften einschliesslich zufriedenstellender mechanischer Verformbarkeit bei Raumtemperatur sind andere attraktive Eigenschaften der Al-Ru B2-Phasen (vergleiche dazu US 5,152,853; Fleischer R.L., (1991), Metall. Trans. A, 22A, 403; US 5,011,554; Wolff I.M., Sauthoff G., (1996), Metall. And Mater. Trans. A, 27A, 2642). Ausserdem wurde berichtet, dass die Oxidationswiderstandsfähigkeit von B2-Ruthenium-Aluminid durch eine Legierung mit einem kleinen Anteil von Yttrium (bis zu 1 Atom-%) und Chrom (bis zu 5 Atom-%) wesentlich verbessert werden kann (vergleiche dazu McKee D.W., Fleischer R.L., (1991), Mat. Res. Soc. Symp. Proc., 213, 969; sowie Wolff I.M., Sauthoff G., Cornish L.A., Steyn H. DeV., Coetzee R., (1997), Structural Intermetallics, ed. Nathal D.B. et al, 815).

Gegenwärtig die einzigen intermetallischen B2 Verbindungen, von welchen die thermische Leitfähigkeit untersucht wurde, sind folgende: AlNi, AlFe und A1Co (vergleiche dazu Terada Y., Ohkubo K., Nakagawa K., Mohri T., Suzuki T., (1995), Intermetallics, 3, 347; sowie Reddy B.V., Deevi S.C., (2000), Intermetallics, 8, 1369).

Das Al-Ni-Ru-Phasendiagramm wurde bei unterschiedlichen Temperaturen untersucht (vergleiche dazu Tsurikov V.F., Sokolovskaya E.M., Kazakova E.F., (1980), Vestnik Moskovskogo Univ. Khim., 35(5), 113; Petrovoj L.A., (1985), Diagrammy Sostoyaniya Metallicheskikh System, ed. N.V. Ageeva, VINITI, Moskau, 30, 323; Chartavorty S., West D.R.F., (1985), Scripta Metall., 19, 1355; Chartavorty S., West D.R.F., (1986), J. Mater. Sci., 21, 2721; Horner I.J., Hall N., Cornish L.A., Witcomb M.J., Cortie M.B., Boniface T.D., (1998), J. Alloys and Compds, 264, 173; Horner I.J., Cornish L.A., Witcomb M.J., (1997), J. Alloys and Compds, 256, 221; Hahls J., Cornish L.A., Ellis P., Witcomb M.J., (2000), J. Alloys and Compds, 308, 205). Die in Zusammenhang mit diesen Studien verfügbaren Informationen variieren bemerkenswert. Tsurikov et al. berichten von zwei B2-Phasen, welche auf AINi und AlRu basieren, in einem ternären System bei 550°C (vergleiche dazu Tsurikov V.F., Sokolovskaya E.M., Kazakova E.F., (1980), Vestnik Moskovskogo Univ. Khim., 35(5), 113), wobei behauptet wird, dass AlRu (β1) bis zu 8 Atom-% von Nickel aufzulösen in der Lage ist, und AlNi (β2) bis zu 5 Atom-% von Ruthenium auflösen können soll. Im Gegensatz dazu hat Petrovoj eine unbeschränkte Löslichkeit zwischen den beiden B2-Phasen bei 800°C innerhalb des ternären Systems gefunden (vergleiche dazu Petrovoj L.A., (1985), Diagrammy Sostoyaniya Metallicheskikh System, ed. N.V. Ageeva, VINITI, Moskau, 30, 323). Chakrovorty et al. haben eine Mischbarkeitslücke zwischen AlRu und AlNi bis zu hohen Temperaturen angedeutet und haben die Existenz eines ternären Gleichgewichtszustandes β1- β2-γ' festgehalten (vergleiche dazu Chartavorty S., West D.R.F., (1985), Scripta Metall., 19, 1355; Chartavorty S., West D.R.F., (1986), J. Mater. Sci., 21, 2721).

Neuere Arbeiten haben eine kontinuierliche feste Lösung zwischen AlRu und AlNi-Phasen beschrieben, obwohl sämtliche (im Gussverfahren) hergestellten Proben zwei Phasen aufwiesen und eine Temperung jeweils nur während kurzer Zeit durchgeführt wurde (weniger als 48 Stunden) (vergleiche dazu Horner I.J., Hall N., Cornish L.A., Witcomb M.J., Cortie M.B., Boniface T.D., (1998), J. Alloys and Compds, 264, 173; Horner I.J., Cornish L.A., Witcomb M.J., (1997), J. Alloys and Compds, 256, 221; Hahls J., Cornish L.A., Ellis P., Witcomb M.J., (2000), J. Alloys and Compds, 308, 205). Die Autoren haben die zwei Phasen der Probe mit einem sogenannten "Coring-Effekt" erklärt, welcher infolge der unterschiedlichen Kristallisationsauslösung für Phasen mit stark unterschiedlichen Solidus-Temperaturen entstehen soll. Dieser Effekt soll sich durch unklare Grenzen zwischen den Körnern und durch die Variation in den Kornzusammensetzungen offenbaren.

Oxidationsresistente Beschichtungen auf Basis von Nickel-Aluminiden (Nickel-Aluminiumlegierungen), welche durch Edelmetalle modifiziert sind, vorzugsweise durch Platin, sind bereits bekannt (vergleiche dazu Wolff I.M., (2002) in Intermetallic Compounds, ed. Westbrook J.H. and Fleischer R.L., 3, 53; Datta P.K., (2002) in Intermetallic Compounds, ed. Westbrook J.H. and Fleischer R.L., 3, 651; US 4,447,538; US 5,763,107; US 5,645,893; US 5,667,663; US 5,981,091; US 5,942,337; Lamesle P., Steinmetz P., Steinmetz J., Alperine S., (1995), J. Electrochem. Soc., 142(2), 497). Der wesentliche Vorteil derartiger Beschichtungen verglichen mit MCrAlY-Bond Coatings (Haftschichten, BC) ist die verbesserte Haftung der äusseren Schicht eines thermisch isolierenden Oxids (normalerweise Yttrium-stabilisiertes Zirkon, YSZ) auf dem metallischen Substrat. Diese Haftung wird durch die Bildung einer reinen, langsam wachsenden α-Al₂O₃-Schicht an der Grenzfläche zwischen YSZ/BC während des Betriebs bewirkt. Unglücklicherweise gibt es einige Nachteile der Platingruppenmetalle, welche als Materialien für thermische Barrierebeschichtungen (thermal barrier coatings, TBC) verwendet werden können. So beispielsweise der sehr hohe Preis der Metalle, die Abreicherung von Aluminium in jenen Zwischenschichten, welche mit Edelmetall angereichert sind, hoher Dampfdruck der Metalle und Volatilität der hauptsächlich auftretenden Oxide (Platin-Dioxid, Rhodium-Dioxid etc.). Dies führt zu einem wesentlichen Verlust der wertvollen Metalle während der Exposition in der aggressiven, oxidativen Umgebung bei hohen Temperaturen (vergleiche dazu Datta P.K., (2002) in Intermetallic Compounds, ed. Westbrook J.H. and Fleischer R.L., 3, 651; Kofstad P., (1988), High temperature corrosion, Elsevier applied science publishers LTD; Jehn H., (1984), J. Less-Common Met., 100, 321).

Auch oxidationswiderstandsfähige Legierungen, welche Ruthenium enthalten, sind bereits untersucht worden und entsprechende Beschichtungsmethoden sind bereits entwickelt worden (vergleiche dazu US 4,980,244; US 4,759,380). Die studierten Legierungen bestanden wahrscheinlich aus einer Mischung von B2-CrRuAl und CrRuFeAl-Phasen und einer Ru- oder Cr-basierten festen Lösung. Bei einigen Zusammensetzungen wurde eine separate α-Cr-Phase vermutet. Die Autoren haben CrRuAl-Legierungen innerhalb des Zusammensetzungsbereichs von 0 bis 60 Atom-% in Chrom untersucht, wobei das Verhältnis von Ru:Al ungefähr bei 50:50 gehalten wurde in CrRuFeA1-Legierüngen. Die besten Oxidationseigenschaften wurden für Legierungen mit einem Gehalt an Chrom zwischen 30 und 60 Atom-% entdeckt. Die CrRuFeAl- und CrRuAl-Legierungen wurden bereits als Hochtemperatur-Schutzbeschichtungen für unterschiedliche Materialien vorgeschlagen: Superlegierungen, feuerfeste Metalle oder Legierungen mit einer feuerfesten Metallbasis, Titan oder Niob-Aluminide etc. Eine andere mögliche Anwendung von Ruenthaltenden Phasen ist als Diffusionsbarriere für TBC's um die Interdiffusion zwischen dem Substrat und der Haftschicht (BC) zu verhindern (vergleiche dazu US 6, 306,524). Strukturelle Hochtemperaturmaterialien enthaltende CrRuFeAlY-Legierungen sind ebenfalls bereits untersucht worden (vergleiche dazu US 6, 306,524),

Aus der US 2002/0197502 ist eine Barriereschicht, oder vielmehr ganz allgemein ein Material zur Beschichtung von Bauteilen offenbart, von der allgemeinen Formel Cr(15-95) E1(5-60), wobei E1 ausgewählt sein kann aus Rhenium, Wolfram oder Ruthenium oder einer Kombination davon. Ganz allgemein wird weiter angegeben, dass zusätzlich 1-35% eines weiteren Metalls E2 vorhanden sein können, namentlich Nickel, Kobalt oder Eisen, und dass zusätzlich 1-35% Aluminium enthalten sein können. Daraus ergibt sich eine allgemeine Formel: A1(0-35) Cr(15-95) E1(5-60) E2(1-35), wobei E1 Rhenium, Wolfram oder Ruthenium oder eine Kombination davon sein kann und E2 Nickel, Kobalt oder Eisen.

### DARSTELLUNG DER ERFINDUNG

Der Erfindung liegt demnach die Aufgabe zugrunde, ein neuartiges Material vorzuschlagen, aus welchem insbesondere bevorzugt Beschichtungen für hohen Temperaturen und korrosiver Umgebung ausgesetzte Oberflächen hergestellt werden können.

Die Lösung dieser Aufgabe wird gemäss den Ansprüchen erreicht, dass eine multinäre, d.h. mehr als drei unterschiedliche Komponenten enthaltende, Legierung der Form AlₓNi_{y}Ru_{z}Mᵤ vorgeschlagen wird, welche wenigstens eine B2-Phase aufweist, wobei x, y, z, und u Atomprozente der Gesamtlegierung sind, wobei der Aluminiumgehalt im Bereich von 40-55 Atomprozent liegt, d.h. wobei x= 40-55; y = 10 -50; z = 5 - 35; U = 5-30, und wobei M ein oder mehrere Metalle resp. Halbmetalle ausgewählt aus der Gruppe: Ir, Pt, Rh, Pd, Cr, Fe, Co, Re, Ta, Ti, Zr, Hf, Y, Sc, Si, B sein kann, und wobei zusätzlich ggf. Verunreinigungen in niedrigen Anteilen vorhanden sein können. Eine B2 Phase ist eine geordnete kubische Phase AB, bei welcher die A-Atome an den Ecken angeordnet sind und die B-Atome im Zentrum der Einheitszelle (cP2 - CsCl-Typ Struktur).

Der Kern der Erfindung besteht somit in der unerwarteten Tatsache, dass durch die Zugabe der Komponente M zu einer Legierung des Typs Al-Ni-Ru Eigenschaften erzeugt werden können, welche für Beschichtungen, insbesondere auf Substraten aus Superlegierungen, von grossem Vorteil sind. Die Al-Ni-Ru-M-Legierungen enthalten wenigstens eine B2-Struktur-basierte Phase. Wenn derartige Phasen als Beschichtungen verwendet werden, ermöglichen sie sowohl einen substantiellen Gewinn der Leistungsfähigkeit und der Lebensdauer als auch eine Reduktion der Unterhaltskosten für Gasturbinen und Düsentriebwerkkomponenten. Die Al-Ni-Ru-M-Legierungen besitzen eine Vielzahl von Eigenschaften, nämlich:
(1) Stark erhöhte Stabilität gegenüber Oxidation, verglichen mit kommerziellen MCrAlY-Haftungsschichten (BC) bei denen normalerweise gilt, dass M = Co, Ni oder Co/Ni.
(2) Erstaunlich niedrige Wärmeleitfähigkeit im Vergleich zu anderen intermetallischen Verbindungen einschliesslich konventioneller 82-Phasen.
(3) Zufriedenstellende plastische Verformbarkeit und andere mechanische Eigenschaften, welche für Ruthenium-Aluminide charakteristisch sind.
(4) Hohe Schmelzpunkte, welche entsprechende niedrige Diffusionsgeschwindigkeiten innerhalb der Legierungen gewährleisten.
(5) Thermische Expansions-Koeffizienten, welche nahe bei jenen der Substrate aus Superlegierungen liegen.

Diese Al-Ni-Ru-M-Legierungen können also zur Verwendung als gegenüber Umwelteinflüssen schützende Beschichtungen und als thermische Barrieren für Schaufeln in Hochtemperatur- und korrosiven Umgebungen von Gasturbinen und Düsentriebwerken verwendet werden.

Es ist zu bemerken, dass diese Legierung auch andere Komponenten in niedrigen Anteilen z.B. als Verunreinigungen enthalten kann, solange sich die Eigenschaften als thermische und korrosionshemmende Baniereschicht erhalten.

Es können beispielsweise auch Kombinationen wie Al-Ni-Ru-Ir, Al-Ni-Ru-Si, aber auch Legierungen wie Al-Ni-Ru-Cr-Ir etc., d. h. mit mehr als einer Komponente des Typs M, mit den entsprechenden vorteilhaften Eigenschaften verwendet werden. Vorteilhaft sind insbesondere Kombinationen mit entweder einer einzigen Komponente M oder mit zwei unterschiedlichen derartigen Komponenten.

Gemäss einer ersten bevorzugten Ausführungsform der erfindungsgemässen Legierung ist y = 10 - 40, gewählt werden. Ebenfalls ist es möglich, z im Bereich von 10 - 35, zu wählen, und/oder y + z im Bereich von 30 - 70, vorzugsweise im Bereich von y + z = 35 -55.

Gemäss einer weiteren bevorzugten Ausführungsform zeichnet sich die Legierung dadurch aus, dass sie wenigstens zwei unterschiedliche, thermodynamisch stabile Phasen des Typs B2 aufweist. Es zeigt sich, dass bei Anwesenheit von zwei derartigen Phasen mit unterschiedlichen Zusammensetzungen besonders vorteilhafte Eigenschaften der Beschichtungen erhalten werden.

Weitere bevorzugte Ausführungsformen der Legierung sind in den abhängigen Ansprüchen beschrieben.

Des Weiteren betrifft die vorliegende Erfindung ein Verfahren zur Herstellung einer Verbindung, wie sie oben beschrieben wurde, bei welchem die Komponenten unter Schutzgas zusammengeschmolzen werden. Das Zusammenschmelzen kann dabei in einem Lichtbogen durchgeführt werden.

Es erweist sich insbesondere als vorteilhaft, die Verbindung nach deren Zusammenschmelzen unter Schutzgas insbesondere bevorzugt in einem Ofen zu tempern. Dies geschieht beispielsweise bei einer Temperatur von im Bereich von 900 bis 1100 Grad Celsius während einer Zeit von mehr als einer Woche, bevorzugt im Bereich von 4 Wochen. Nach dem Tempern (Annealing) wird das Material vorteilhafterweise im Ofen ausgekühlt. Das Tempern kann dabei in strukturierter Weise zum Beispiel stufenweise geschehen, wobei ein Schema mit stufenweise zunehmender oder mit stufenweise abnehmender Temperatur oder eine Kombination derartiger Schemata verwendet werden kann.

Eine bevorzugte Ausführungsform des erfindungsgemässen Verfahrens ist dadurch gekennzeichnet, dass die Verbindung als Beschichtung auf einen Werkstoff, insbesondere auf ein Substrat aus einer Superlegierung, aufgebracht wird, wobei insbesondere Verfahren wie Plasmaspray (z.B. air plasma spraying: APS; vacuum plasma spraying: VPS; Low pressure plasma spraying: LPPS) oder Hochgeschwindigkeitsmethoden (z.B. High velocity oxyfuel spraying: HVOF) Anwendung finden können, gegebenenfalls gefolgt von einem Tempern und/oder von einer Aluminisierung.

Ausserdem betrifft die vorliegende Erfindung die Verwendung einer Verbindung respektive Legierung, wie sie oben beschrieben wurde, bevorzugt hergestellt nach einem der Verfahren, wie es oben beschrieben wurde. Das Material soll dabei als Werkstoff für ein Bauteil, welches hohen Temperaturen ausgesetzt ist, und welches insbesondere heissen, ggf. korrosiven Gasen ausgesetzt ist respektive von heissen Gasen umströmt wird, verwendet werden. Es kann sich um ein Bauteil einer Gasturbine oder eines Kompressors oder eines Düsentriebwerks handeln, insbesondere bevorzugt um eine Schaufel oder Leitschaufel einer Gasturbine oder eines Kompressors oder eines Düsentriebwerks.

Bevorzugtermassen liegt dabei die Verbindung als Beschichtung insbesondere bevorzugt der direkt den heissen Gasen ausgesetzten Oberfläche vor, wobei gegebenenfalls unterhalb der Beschichtung eine weitere Funktionsschicht insbesondere zur Haftvermittlung oder zur weiteren Barrierewirkung vorliegt. Alternativ ist es aber möglich, auch auf einer Schicht aus erfindungsgemässen Material noch eine weitere Schicht, beispielsweise aus Yttrium-stabilisiertem Zirkon vorzusehen. Eine derartige Beschichtung kann eine Dicke von im Bereich von 10 - 400 µm, insbesondere bevorzugt im Bereich von 100 bis 200 µm aufweisen.

Weiterhin betrifft die vorliegende Erfindung eine Beschichtung mit einer Legierung, wie sie oben beschrieben wurde, respektive eine Komponente oder ein Bauteil einer Gasturbine oder Dampfturbine oder eines Düsentriebwerks mit einer derartigen Beschichtung. Typischerweise ist dabei auf einem Substrat aus Superlegierung, welche optional mit einer Haftschicht bevorzugt des Typs MCrAlY (bond coat, BC, wobei normalerweise M = Co, Ni oder Co/Ni) überzogen ist, die Legierung des Typs Al-Ni-Ru-M aufgetragen ist. Die Schicht aus der erfindungsgemässen Legierung weist dabei z. B. eine Dicke im Bereich von 100 - 500 µm auf. Optional kann auf dieser Schicht der Legierung eine weitere keramische Schicht insbesondere aus Yttrium-stabilisiertem Zirkon (YSZ) angeordnet sein.

Weitere bevorzugte Ausführungsformen der vorliegenden Erfindung sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: schematische Darstellungen möglicher thermischer Barriere-Beschichtungen aus Al-Ni-Ru-M-Legierungen, wobei die obere Seite den Gasen ausgesetzt ist;
- Fig. 2: Beispiel der Charakterisierung von Legierung 4 und Legierung 5, a) Röntgendiffraktogramm (λ = Cu) der Legierung 4 getempert bei 900 °C, b) SEM-Aufnahme der Legierung 4, c) Röntgendiffraktogramm (λ = Cu) der Legierung 5 getempert bei 900 °C, d) SEM-Aufnahme der Legierung 5;
- Fig. 3: isothermer Schnitt durch das Phasendiagramm von AlNiRu bei 900°C, dabei bezeichnen ausgezogene Linien bekannte Gleichgewichtszustände unter Einschluss von bekannten Konoden, gestrichelte Linien geben vorhergesagte Gleichgewichte an, die Bereiche mit β-Phasen sind schraffiert dargestellt;
- Fig.4: Gewichtszunahme von Al-Ni-Ru-M B2 Legierungen im Vergleich zu kommerziellem MCrAlY als Funktion der Oxidationszeit unter Laboratmosphäre bei a) 950°C und b) 1050°C ;
- Fig. 5: Oxidationsverhalten der Ruthenium-reichen Legierungen 9 und 13, a) Röntgendiffraktogramm von 9 ; b) Röntgendiffraktogramm von 13, wobei jeweils ein hochkant stehendes Quadrat für die β-Phase steht, ein Kreis für die α-Al₂O₃-Phase und ein liegendes Quadrat für Ru, c) SEM-Aufnahme von 9, d) SEM-Aufnahme von 13, wobei jeweils auf der linken Seite die Oxidation bei 950 °C dargestellt ist und auf der rechten Seite die Oxidation bei 1050 °C ;
- Fig. 6: Oxidationsverhalten einer Nickel-reichen Legierung 11, a) Röntgendiffraktogramm, wobei jeweils ein hochkant stehendes Quadrat für die β-Phase steht, ein Kreis für die α-Al₂O₃-Phase und ein liegendes Quadrat für Ru, b) SEM-Aufnahme einer Probe oxidiert bei 950°C, c) SEM-Aufnahme einer Probe oxidiert bei 1050°C ;
- Fig. 7: Oxidationsverhalten der Legierung 14, a) Röntgendiffraktogramm, wobei jeweils ein hochkant stehendes Quadrat für die β-Phase steht, ein Kreis für die α-Al₂O₃-Phase und ein liegendes Quadrat für Ru, b) SEM-Aufnahme einer Probe oxidiert bei 950°C, c) SEM-Aufnahme einer Probe oxidiert bei 1050°C ;
- Fig. 8: thermische Leitfähigkeiten von B2-Legierungen, a) Temperaturabhängigkeit der thermische Leitfähigkeit von Al-Ni-Ru-M-Legierungen im Vergleich zu AlFe, wobei die Daten für AlFe aus Reddy B.V., Deevi S.C., (2000), Intermetallics, 8, 1369 stammen, b) Abhängigkeit der thermischen Leitfähigkeit von verschiedenen B2-Legierungen von der Al-Konzentration bei Raumtemperatur (Daten aus Terada Y., Ohkubo K., Nakagawa K., Mohri T., Suzuki T., (1995), Intermetallics, 3, 347); und

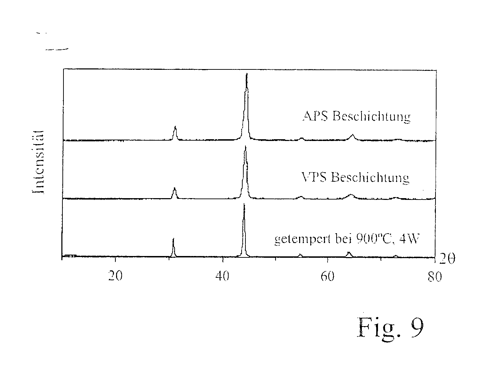

- Fig. 9: Röntgendiffraktogramme von B2-strukturbasierten Al₅₀Ni₄₀Ru₁₀-Beschichtungen, welche unter Verwendung von Vakuum-Plasmaspraying (VPS) und Plasmamethoden (air plasma spraying, APS) erhalten wurden im Vergleich mit ursprünglicher getemperter Legierung.

### WEGE ZUR AUSFÜHRUNG DER ERFINDUNG

Der thermische Abbau und die Oxidation von Komponenten von Gasturbinen oder Düsentriebwerken unter der gleichzeitigen Einwirkung von hoher Temperatur und Oxidation oder Korrosionsumgebung beschränkt die mögliche Betriebstemperatur (was zu einer Erniedrigung der möglichen Effizienz der Turbine führt) und führt zu einer Reduktion der Lebenszeit der Komponenten (und damit verbunden zu einer Erhöhung der Unterhaltskosten). Ein modernes Schutzsystem vor thermischer Belastung und Oxidation kann generell als 3-Schichten-Aufbau betrachtet werden: ein Superlegierungssubstrat SX basierend auf Nickel (Ni), eine Haftschicht (Bond Coat, BC, MCrAlY oder Nickel-Aluminide) und eine äussere Schicht eines thermisch isolierenden Oxids (thermal barrier coating, TBC, normalerweise YSZ).

Leider leiden derartige zusammengesetzte Kompositstrukturen an Spallation der YSZ-Schicht in heissen und aggressiven Umgebungen. Dies geschieht wegen einer schlechten Abstimmung der Wärmeausdehnungskoeffizienten der metallischen und keramischen Teile des Bauteils, wegen der Bildung einer Mischung von unterschiedlichen Oxiden, unter Einschluss von Spinellen, die an der Grenzfläche zwischen YSZ/BC formieren, wegen schädlicher Interdiffusion etc.. Auf der anderen Seite hat YSZ neben den einzigartigen thermischen Isolationseigenschaften noch mehrere Nachteile, nämlich z.B. ungenügende mechanische Integrität, hohes spezifisches Gewicht, Durchlässigkeit für Sauerstoff etc.

Während der systematischen Untersuchung von Al-Ni-R-M-Legierungen mit B2-Typ basierter Struktur kann beobachtet werden, dass diese Legierungen sehr hohe Schmelzpunkte besitzen und hochgradig stabil gegenüber Oxidation sind während sie eine unerwartet niedrige Wärmeleitfähigkeit aufweisen. Entsprechend können diese B2-Al-Ni-Ru-M-Legierungen unterschiedliche Funktionen übernehmen wie
(i) Schutz vor Oxidation,
(ii) als Haftschicht (Bond Coat) und
(iii) thermische Isolation.

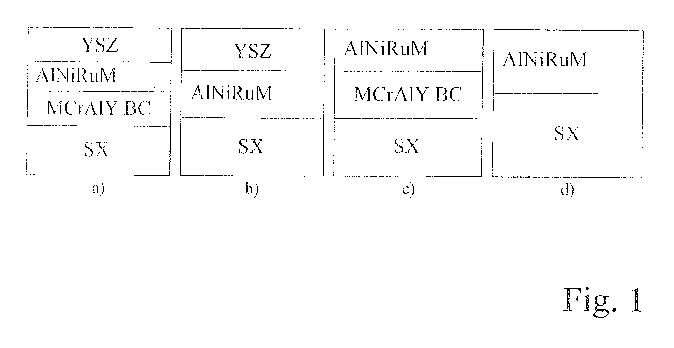

Die Legierungen können als BC zusammen oder anstelle von bereits existierenden Typen von Haftschicht en verwendet werden. Mögliche Schichtstrukturen sind in Figur 1 zusammengestellt. Fig. 1a) zeigt einen Aufbau, bei welchem die vorgeschlagene Schicht zwischen der an der Oberfläche angeordneten YSZ-Schicht und der unmittelbar auf der Superlegierung SX angeordneten BC-Schicht liegt. Die Schicht aus MCrAlY BC weist in einem solchen Aufbau typischerweise eine Dicke von 100 bis 300 µm auf, jene aus AlNiRuM eine Dicke von 100 bis 300 µm, und jene aus YSZ eine Dicke von 100 bis 300 µm. Die Dicke hängt dabei von der Art der Auftragung ab, so wird beispielsweise bei APS eine Schicht aus YSZ eine Dicke im Bereich von 100- 400 µm erzeugt, während bei EBPVD (electron beam physical vapor deposition) eine Dicke von 100 - 150 µm erzeugt wird. In Figur 1b) wird auf die BC-Schicht verzichtet, und die vorgeschlagene Schicht liegt zwischen der Oberflächen-Schicht aus YSZ und der Schicht aus Superlegierung SX. Derartige Kompositstrukturen gewährleisten eine bessere Adhäsion der YSZ-Schicht an den metallischen Teilen des Bauteils und ausserdem gewährleisten sie eine wesentlich verbesserte Widerstandsfähigkeit gegenüber Oxidation und/oder Korrosion. Die Schicht aus AlNiRuM weist typischerweise hier eine Dicke von 100 bis 300 µm, und jene aus YSZ eine Dicke von 100 bis 300 µm auf.

Alternativ können die Al-Ni-Ru-M-Legienungen bestimmter Zusammensetzung anstelle der BC- und YSZ-Schichten verwendet werden, und gleichzeitig die oben erwähnten Funktionen der Haftschicht und der TBC-Funktion von YSZ übernehmen. Diese Überzugsbeschichtung aus nur einer Schicht wird eine wesentlich grössere Widerstandsfähigkeit gegenüber mechanischen Rissen aufweisen, als die existierenden Mehrschichtzusammensetzungen. Fig. 1c) zeigt eine Anordnung, bei welcher die vorgeschlagene Schicht an der Oberfläche liegt, und über eine BC-Schicht auf der Schicht aus Superlegierung SX liegt. Die Schicht aus AlNiRuM weist in einem solchen Aufbau typischerweise eine Dicke von 300 bis 800 µm auf, jene aus MCrAlY BC eine Dicke von 100 bis 300 µm. Zuletzt ist in Figur 1d) eine Struktur dargestellt, bei welcher auf der Schicht aus Superlegierung SX nur eine einzige Schicht aus dem vorgeschlagenen Material angeordnet ist. Die einzelne Schicht aus AlNiRuM weist in einem solchen Aufbau typischerweise eine Dicke von 300 bis 1000 µm auf.

### Experimentelle Daten

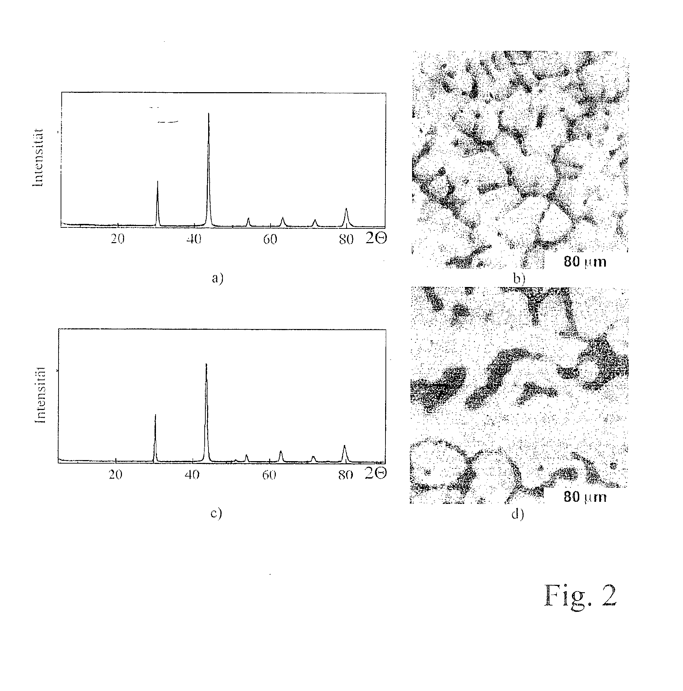

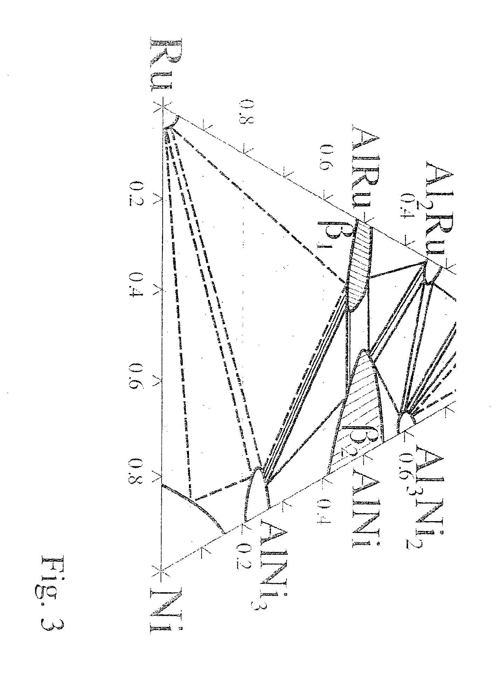

Die Al-Ni-Ru-M-Legierungen wurden in einem Lichtbogenschmelzverfahren unter Verwendung einer Dauerelektrode aus Wolfram unter Argon-Atmosphäre mit einem Titan-Sauerstoff-Getter in einem wassergekühlten Kupferofen aufgeschmolzen. Anschliessend wurden die gegossenen Legierungen unter Argon-Atmosphäre bei 900°C respektive 1100°C während 4 Wochen getempert. Die ursprüngliche Zusammensetzung, die Zustände der Temperung und die Resultate der Studie sind in Tabelle 1 sowie in den Fig. 2 und 3 zusammengestellt.

**Tabelle 1: Charakterisierung von Al-Ni-Ru-M Legierungen, getempert bei 900 oder 1100 °C während 4 Wochen**

| No | Gesamtzusammensetzung | Temper-T, °C | Phase 1 | | Phase 2 | | Solidus/ liquidus T, °C |
|---|---|---|---|---|---|---|---|
| | | | Zusammens. | Struktur | Zusammens. | Struktur | |
| 1Δ | Al₄₆Ni₂₈Ru₂₆ | 900 | Al₄₆Ni₁₈Ru₃₆ | β1(B2) | Al_{46.5}Ni₃₅Ru_{18.5} | β2(B2) | - |
| 2Δ | Al₄₃Ni₂₉Ru₂₈ | 900 | Al₄₆Ni₁₇Ru₃₇ | β1(B2) | Al₂₈Ni₆₄Ru₈ | γ' | - |
| 3Δ | Al_{51.5}Ni_{26.5}Ru₂₂ | 900 | Al₆₄Ni₂Ru₃₄ | Al₂Ru | Al_{50.5}Ni₂₉Ru_{20.5} | β2(B2) | - |
| 4*Δ | Al₆₅Ni₂₀Ru₁₅ | 900 | Al₆₅Ni₄Ru₃₁ | Al₂Ru | Al₆₀Ni₃₆Ru₄ | Al₃Ni₂ | - |
| 5Δ | Al₅₀Ni₃₇Ru₁₀Si₃ | 900 | - | - | Al₅₀Ni₃₇Ru₁₀Si₃ | β2(B2) | >1500 |
| 6 | Al₄₇Ni₃₇Ru₁₀Fe₆ | 1100 | - | - | Al₄₇Ni₃₇Ru₁₀Fe₆ | β2(B2) | >1500 |
| 7 | Al₄₆Ni₃₄Ru₁₀Fe₁₀ | 1100 | Al₄₆Ni₂₈Ru₁₇Fe₉ | β1(B2) | Al₄₆Ni₃₆Ru₇Fe₁₁ | β2(B2) | 1590/1800 |
| 8** | Al₄₆Ni₂₈Ru₉Fe₁₇ | 1100 | Al₅₀Ni₂₄Ru₁₀Fe₁₆ | β1(B2) | Al₂₂Ni₄₇Ru₃Fe₂₈ | γ' | - |
| 9Δ | Al₄₅Ni₁₂Ru₄₃ | 900 | Al₄₅Ni₁₂Ru₄₃ | β1(B2) | - | - | >2100 |
| 10Δ | Al₄₆Ni₂₉Ru₂₅ | 900 | Al₄₆Ni₁₈Ru₃₆ | β1(B2) | Al_{46.5}Ni₃₅Ru_{18.5} | β2(B2) | 1870/2090 |
| 11Δ | Al₄₄Ni₄₅Ru₁₁ | 900 | - | - | Al₄₄Ni₄₅Ru₁₁ | β2(B2) | 1745/1875 |
| 12Δ | Al₄₂Ni₄₈Ru₁₀ | 900 | Al₂₈Ni₆₉Ru₄ | γ' | Al₄₃Ni₄₆Ru₁₁ | β2(B2) | 1645/1910 |
| 13 | Al₄₅Ni_{23.5}Ru₂₉Cr_{2.5} | 900 | Al₄₅Ni_{18.5}Ru_{34.5}Cr₂ | β1(B2) | Al₄₅Ni_{30.5}Ru₂₁Cr_{3.5} | | 1830/2080 |
| 14 | Al₄₄Ni₂₉Ru₂₄Ir₃ | 900 | Al₄₄Ni₁₉Ru_{33.5}Ir_{3.5} | β1(B2) | Al₄₄Ni₄₀Ru_{14.5}Ir_{1.5} | β2(B2) | 1880/2100 |

| | | | | | | | |
|---|---|---|---|---|---|---|---|
| *-*Legierung enthält auch geringe Anteile einer Phase auf Basis von Al₁₃Ru₄* **-*Legierung enthält auch geringe Anteile einer Phase auf Basis von Al₂Ru* Δ Vergleichsbeispiel | | | | | | | |

In Fig. 2 sind Beispiele der Charakterisierung von Legierungen des Typs Al-Ni-Ru angegeben. a) zeigt dabei ein Pulver-Röntgendiffraktionsmuster (XRD) bei der Verwendung von λ-Cu Strahlung der Legierung des Typs 4 aus Tabelle 1, getempert bei 900° C. Fig. 2b) zeigt Aufnahmen eines Rasterelektronenmikroskops (SEM, in Rückstreuung) der Legierung 4, wobei die helle Phase die β1-Al₄₆Ni₁₈Ru₃₆ und die dunkle Phase die β2-Al_{46.5}Ni₄₅Ru_{8.5} darstellt. Fig. 2 c) zeigt wiederum Pulver-Röntgendiffraktionsmuster (XRD) bei der Verwendung von λ-Cu Strahlung der Legierung des Typs 5 aus Tabelle 1, getempert bei 900° C. Fig. 2e) zeigt Aufnahmen eines Rasterelektronenmikroskops (SEM, in Rückstreuung) der Legierung 5, wobei die helle Phase die β1-Al₆Ni₁₇Ru₃₇ und die dunkle Phase die γ'-Al₂₈Ni₆₄Ru₈ darstellt.

In Fig. 3 ist ein isothermer Schnitt durch das Phasendiagramm von AlNiRu bei 900°C dargestellt. Dabei bezeichnen ausgezogene Linien bekannte Gleichgewichtszustände unter Einschluss von bekannten Konoden. Gestrichelte Linien geben vorhergesagte Gleichgewichte an. Die Bereiche mit β-Phasen sind schraffiert dargestellt.

Zur Untersuchung der physikalischen Eigenschaften wurden Proben teilweise wieder aufgeschmolzen, dies mit der Absicht, die an der Oberfläche vorhandenen Poren zu schliessen. Sie wurden ausserdem einem isostatischen Hochdruckverfahren (high isostatic pressure procedure, HIP) unterzogen, vergleiche dazu Tabelle 2.

**Tabelle 2. Parameter der HIP**

| Proben | Zustand | Temperatur (°C) | Druck (bar) | Behäller | Füller | Dauer der HIP (h) |
|---|---|---|---|---|---|---|
| 9-14 | Bulk | 1360 | 1300 | Stainless steel | BN | 3 |

Alle diese Legierungen wurden unter Verwendung von Röntgenpulverdiffraktionsmethoden (XRD) untersucht. Dabei wurde ein Scintag Röntgenpulverdiffraktometer mit einem Germanium-Detektor unter Verwendung von Kupferstrahlung verwendet. Rasterelektronenmikroskopische Aufnahmen (scanning electron microscopy, SEM) wurden im Rückstreuungsmodus bei 10kV Beschleunigungsspannung in einem Hitachi S-900 "in-lens"-Feldemissions-Rasterelektronenmikroskop mit einem Standard Everhard-Thornley SE-Detektor und einem YAG-Typ BSE-Detektor durchgeführt. Energie-dispersive Röntgenspektroskopie (energy dispersive X-ray spectroscopy, EDS) wurde bei einer Beschleunigungsspannung von 15 bis 30kV durchgeführt, wobei ein "LEO 1530"-Analysator unter Verwendung des VOYAGER-Softwarepakets verwendet wurde. Elektronenmikrosondenanalyse (electron micro probe analysis, EPMA) wurde unter Verwendung eines "CAMECA SX50"-Mikroanalysators durchgeführt. Als Resultat konnte die Existenz einer Mischbarkeitslücke zwischen AlRu und AlNi-Phasen im ternären AlNiRu-System eindeutig bestätigt werden.

Die Phasenübergangstemperaturen wurden unter Verwendung von differentieller thermischer Analyse (differential thermal analyser, DTA) auf einem Gerät von "Perkin Eimer DTA 7" bis zu einer Temperatur von 1500°C unter Verwendung von Aluminium-Trioxid-Tiegeln unter Argon hoher Reinheit und Aufheiz- respektive Abkühlraten von 10°C pro Minute durchgeführt. Für die Messung von Schmelztemperaturen oberhalb von 1500°C wurde ein differentielles thermisches Gerät "HT-DTA-3" verwendet, wie dies in Kocherzhinskiy Y.A., Shishkin E.A., Vasilenko V.I., (1971), Phase diagrams of the metallic systems, ed. Ageev N.V. und Ivanov O.S., Moskau: Nauka, 245, beschrieben wird. Es wurde bis 2200°C betrieben unter Verwendung von Hafnium-Dioxid und Scandium-Trioxid-Tiegeln unter Verwendung von W/W-20Re thermoelektrischen Elementen unter Helium hoher Reinheit und Aufheiz- respektive Abkühlraten von 50°C pro Minute. Die Schmelzpunkte von Al-Ni-Ru-M-Legierungen sind in Tabelle 1 zusammengestellt. Alle untersuchten Proben zeigten hohe Schmelzpunkte, was diese Legierungen dazu prädestiniert, als Hochtemperaturbeschichtungen verwendet zu werden. Der höchste beobachtete Schmelzpunkt unter den studierten Legierungen übersteigt sogar 2100°C.

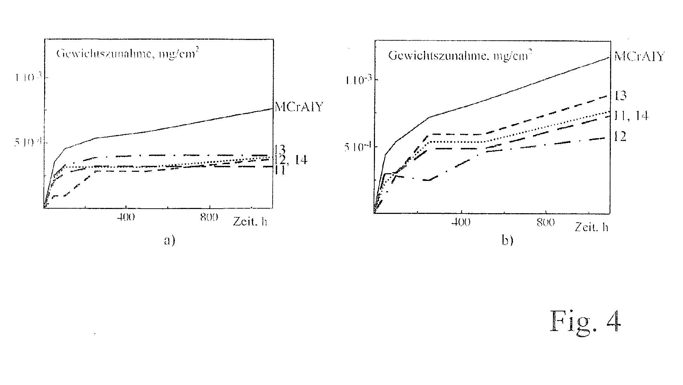

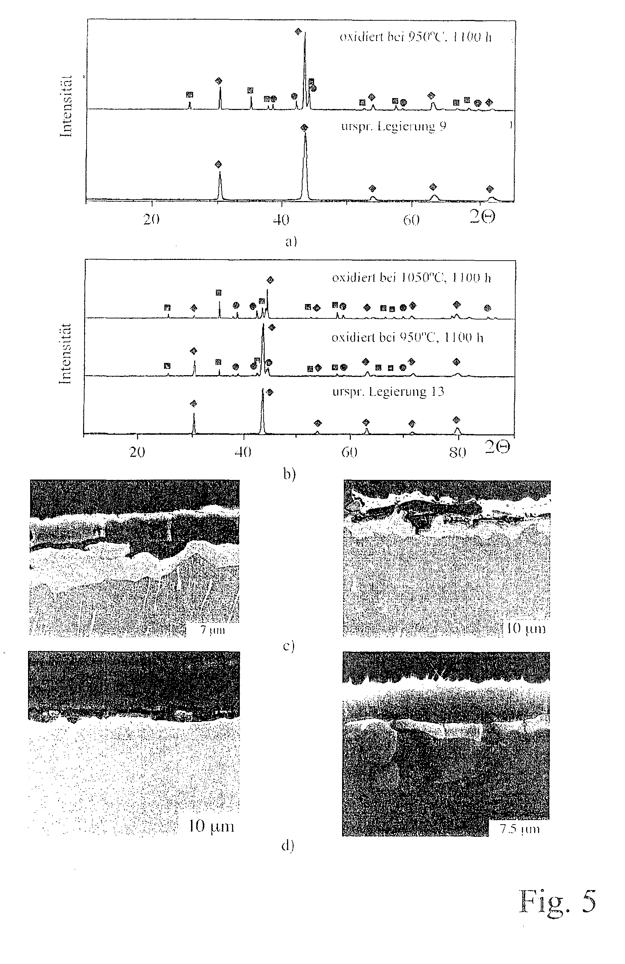

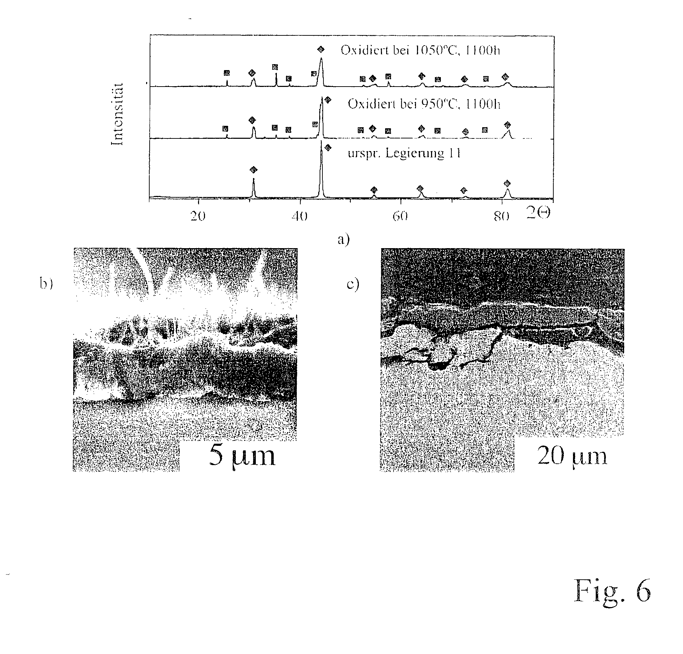

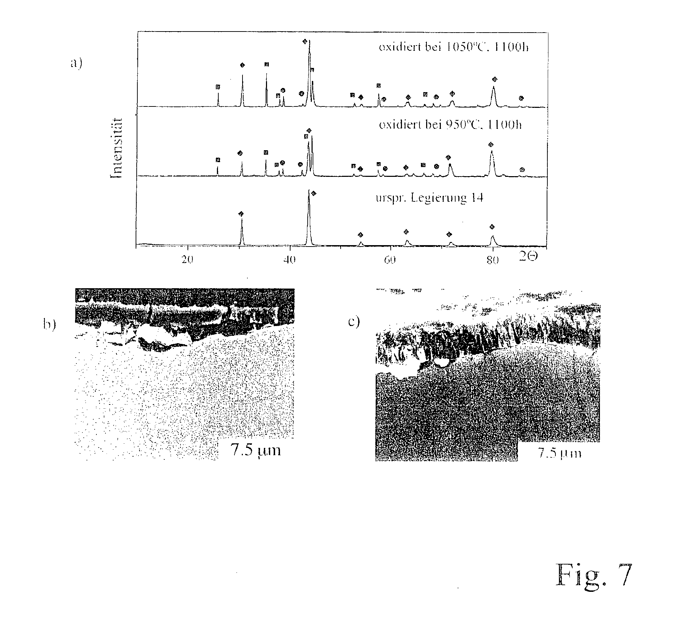

Oxidationstests wurden unter Normalatmosphäre bei 950°C und 1050°C durchgeführt, unter Verwendung von MCrAlY als internem Standard. Die Oxidation von Al-Ni-Ru-M B2-Legierungen ist langsamer als jene von kommerziellem MCrAlY, vergleiche dazu Fig. 4. Die schützende α-Al₂O₃-Oberflächenschicht entwickelt sich bereits nach 100 bis 150 Stunden unter Oxidation bei 950°C und 1050°C. Diese schützende Schicht ist (i) einphasig, (ii) dicht, (iii) enthält keinen bemerkenswerten Anteil von Nickel oder Ruthenium und (iiii) verfügt über eine gute Haftung zur Beschichtung. Eine dichte kontinuierliche Ruthenium-Unterschicht bildet sich zwischen der α-Al₂O₃-Schicht und der Legierung für eine Zusammensetzung mit einem Rutheniumgehalt > 25 Atom-%. Die Schicht kann (i) beträchtliche Anteile von Chrom oder Iridium enthalten und (ii) verfügt über eine gute Haftung zur Oberflächenschicht und zur Beschichtung. Es gibt keine bemerkenswerten Unterschiede im Oxidationsmechanismus von Al-Ni-Ru-M B2-Legierungen bei 950°C und 1050°C, vergleiche dazu Fig. 5 bis 7. Die Oxidationsstabilität der studierten B2-basierten Strukturen aus Nickel-Ruthenium-Aluminiden ist signifikant besser als jene, die für die Referenzlegierung MCrAlY gemessen wurden.

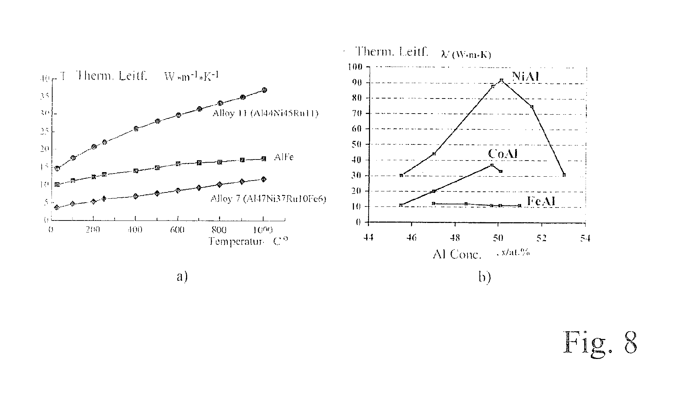

Laserflashmethoden wurden dazu verwendet, um die Temperaturleitfähigkeit zu messen. Sie wurde in einem Gerät des Typs "TC-3000H/L SINKU-RIKO" gemessen, wie es in den folgenden Referenzen beschrieben wird: Parker W.J., Jenkins R., Burner C.P., Abort G.L., (1961), J. Appl. Phys., 32(9), 1679; Namba S., Kim P.H. und Arai T., (1967), J. Appl. Phys., 36(8), 661. Al-Ni-Ru-M B2-Legierungen bestimmter Zusammensetzung zeigten eine überraschend niedrige thermische Leitfähigkeit verglichen mit anderen intermetallischen Verbindungen einschliesslich konventioneller B2-Phasen. Die ternären Al-Ni-Ru B2-Legierungen haben bereits eine niedrigere thermische Leitfähigkeit als Al-Ni und Al-Co B2-strukturbasierte Phasen. Substituiert man Ruthenium für Eisen, reduziert sich die thermische Leitfähigkeit ungefähr um einen Faktor 3 bei Raumtemperatur, vergleiche dazu Fig. 8.

Die Messungen der Wärmeausdehnungskoeffizienten (coefficients of thermal expansion, CTE) wurden unter Verwendung eines Geräts des Typs DIL 402C (pushrod) Dilatometer, hergestellt von NETZSCH, durchgeführt. Die Proben wurden zu Stäben von 5 mm Durchmesser und ungefähr 5 mm Länge zugeschnitten. Das Gerät wurde in einem Temperaturbereich von 20°C bis 1000°C betrieben. Die Temperatur wurde mit einer Geschwindigkeit von 5°C pro Minute verändert. Die Wiederholbarkeit wurde verifiziert, indem jede Probe 3mal gemessen wurde. Die Messungen wurden unter Argon-Atmosphäre durchgeführt, was genügte, um Oxidation auszuschliessen.

Die gute Übereinstimmung der Wärmeausdehnungskoeffizienten von B2-strukturbasierten Al-Ni-Ru-M Legierungen mit jenen der Substrate aus advanced CMSX-4-Legierung kann aus Tabelle 3 ersehen werden.

**Tabelle 3: Technische Wärmeausdehnungskoeffizienten α [(1/lₒ/ΔT] [x10⁻⁶, K⁻¹] der B2-strukturbasierten Legierungen 8 (Al₄₆Ni₂₈Ru₉Fe₁₇) und advanced CMSX-4 Legierung.**

| T,°C | α [x10⁻⁶, K⁻¹] | | T, °C | α [x 10⁻⁶, K⁻¹] | |
|---|---|---|---|---|---|
| | Legierung 8 | Advanced CMSX-4 | | Legierung 8 | Advanced CMSX-4 |
| 20 | - | - | 650 | 15.73 | 13.61 |
| 100 | 12.75 | 11.59 | 700 | 15.85 | 13.82 |
| 200 | 13.80 | 11.99 | 750 | 15.92 | 14.05 |
| 300 | 14.17 | 12.33 | 800 | 15.96 | 14.30 |
| 400 | 14.49 | 12.68 | 850 | 16.03 | 14.57 |
| 500 | 15.02 | 13.03 | 900 | 16.11 | 14.87 |
| 550 | 15.32 | 13.22 | 950 | 16.16 | 15.23 |
| 600 | 15.55 | 13.41 | 1000 | 16.19 | 15.66 |

Die ursprünglichen Legierungen für die Beschichtung wurden in einem Vakuum-Induktionsschmelzofen unter 140 mbar Partialdruck von hochreinem 8.4 Argon durchgeführt bei 75kW 2000Hz und in einem Magnesium-Oxid-Tiegel bei einer Temperatur von ungefähr 1800°C.

Die Pulverisierung wurde unter Verwendung der "counter-stream milling method" durchgeführt, unter Verwendung eines Geräts des Typs 100 AFG (HOSOKAWA ALPINE AG & Co. OHG, Deutschland) unter Strickstoffatmosphäre. Die gemessenen Parameter waren d₅₀ = 30 µm, d₁₀₀ = 63 µm. Zur Messung der Verteilung der Paitikelgrössen wurde die Malvern-Methode verwendet.

Die Beschichtungen wurden unter Verwendung von Methoden wie Vakuum-PlasmaSpray (vacuum plasma spraying, VPS), Plasmamethoden (air plasma spraying, APS) sowie high velocity oxy-fuel (HVOF) auf die Substrate aus Superlegierung SX aufgebracht, welche aus advanced CMSX-4^{®} (Cannon Muskegon Corporation, Michigan, US) bestanden. Die Dicke der Beschichtung aus Al-Ni-Ru-M variierte von 100 bis 300 µm.

Die Kompatibilität zwischen den Beschichtungen und den Superlegierungs-Substraten SX wurde untersucht unter Verwendung des Diffusionskopplungsansatzes. Die Diffusionspaare wurden zusammengebracht, indem zylindrische Proben in Molybdän-Behältern bei 1100°C unter Vakuum von 10⁻⁶ bar während 15 Stunden getempert wurden, gefolgt von einer Temperung bei der gleichen Temperatur und im Vakuum während 50 Stunden ohne jede zusätzliche mechanische Druckbelastung.

Die Untersuchung von Beschichtungen unter Verwendung von XRD-, SEM-, EDS-, EPMA- und WD-XRF Methoden (Wellenlängenspezifische Röntgenfluoreszenzspektroskopie, wavelength dispersive X-ray flurescence) bestätigte deren B2-basierte Struktur. Die WD-XRF Messungen wurden unter Verwendung eines Geräts des Typs Analytical PW2400 (PANalytical) von Philips durchgeführt mit einer Rh Röntgenröhre bei der Eidgenössischen Materialprüfungs- und Forschungsanstalt EPMA Dübendorf). Zur Datenverarbeitung wurde das Softwarepaket UniQuant4 verwendet.

Die genügende Härte und die niedrige Porosität der Beschichtungen kann aus Tabelle 4 erkannt werden.

**Table 4. Härte (Vickers-Härte Hv) und Porosität von B2-strukturbasierten Legierungen des Typs Al₅₀Ni₄₀Ru₁₀**

| Beschichtungsverfahren | Hv, 300 g, 30 s | Porosität (%) |
|---|---|---|
| APS | 425.78 | 8.5 |
| VPS | 629.63 | 5.3 |

Die Instrumentierung zum Ausmessen der Mikrohärte war wie folgt: Ein Zeiss Axioplan Mikroskop zur Generierung eines optischen Bildes, ein Panasonic WV CD 50 Instrument, CCD Kamera zur Aufnahme des Bildes, SONY Monitor zur Darstellung des digitalisierten Bildes und ANTON PAAR MHT -4 Rechner zur Berechnung der Werte der Mikrohärte aus der angelegten Last und den gemessenen Diagonalen.

Die Porosität der Beschichtungen wurde unter Verwendung des Softwarepakets AnalySis (Soft Imaging System GmbH, Germany) unter Zuhilfenahme der rasterelektronischen Aufnahmen bestimmt.

### BEZUGSZEICHENLISTE

- YSZ: Yttrium-stabilisiertes Zirkon
- BC: Haftschicht, Bond Coat
- SX: Superlegierung
- TBC: Thermische Wärmedämmschicht, thermal barrier coating
- XRD: Röntgendiffraktion
- SEM: Rasterelektronenmikroskop, Scanning electron microscopy
- HIP: isostatisches Hochdruckverfahren, high isostatic pressure procedure
- EDS: Energie-dispersive Röntgenspektroskopie, energy dispersive X-ray spectroscopy
- EPMA: Elektronenmikrosondenanalyse, electron micro-probe analysis
- DTA: differentielle thermische Analyse, differential thermal analysis
- CTE: Wärmeausdehnungskoeffizient, coefficient of thermal expansion,

## Patentansprüche

1. Multinäre Legierung der Form:
AlₓNi_{y}Ru_{z}Mᵤ,
welche wenigstens eine B2-Phase aufweist,
wobei x, y, z, und u Atomprozente der Gesamtlegierung sind,
wobei x=40-55; y=10-50; z=5-35; u=5-30;
und wobei M mindestens ein Metall resp. Halbmetalle ausgewählt aus der Gruppe:
Ir, Pt, Rh, Pd, Cr, Fe, Co, Re, Ta, Ti, Zr, Hf, Y, Sc, Si, B ist,
sowie ggf. vorhandene Verunreinigungen in niedrigen Anteilen.

2. Legierung nach Anspruch 1, **dadurch gekennzeichnet, dass** y=10-40,
und/oder dass z = 10-35,
und/oder dass y + z = 30 - 70, vorzugsweise y+z=35-55.

3. Legierung nach einem der vorhergehenden Ansprüche, **dadurch gekennzeichnet,**
**dass** für M = Co, u ≤ 20,
**dass** für M = Ir, Pt, Rh, Pd, 5 ≤ u ≤ 10, vorzugsweise u = 5,
**dass** für M = Cr, 5 ≤ u ≤ 15, vorzugsweise u = 5-10,
**dass** für M = Fe, u=7-12,
**dass** für M = Zr, Hf, u = 5,
**dass** für M = Si, B, Nb, Mo, W, u = 5,
**dass** für M = Re, Ti, 5 ≤ u ≤ 10, vorzugsweise u = 5,
**dass** für M = Ta, 5 ≤ u ≤ 20, vorzugsweise 5 ≤ u ≤ 10,
mit der Vorgabe, dass 0 < u für wenigstens eines der M.

4. Legierung nach einem der vorhergehenden Ansprüche, **dadurch gekennzeichnet, dass** sie wenigstens 30 Massen-% wenigstens einer B2-Struktur aufweist, und dass sie insbesondere bevorzugt zwei unterschiedliche, thermodynamisch stabile Phasen des Typs B2 aufweist.

5. Legierung nach einem der vorhergehenden Ansprüche, **dadurch gekennzeichnet, dass** M ausgewählt ist aus der Gruppe Cr, Ir, Si, Pt, dass
x = 43 - 53, dass 5 ≤ u ≤ 20 und dass
y = 30 - 45 wenn z = 5 - 17, respektive dass
y = 18 - 35 wenn z = 17 - 35, respektive dass
y=5-18 wenn z=30-45.

6. Legierung nach einem der vorhergehenden Ansprüche, **dadurch gekennzeichnet, dass** M = Fe und dass x = 45 - 50, insbesondere bevorzugt x = 46, y = 30 - 35, insbesondere bevorzugt y = 34, z = 9 - 12, insbesondere bevorzugt z = 10 und u = 8 - 12, insbesondere bevorzugt u = 10.

7. Legierung nach einem der vorhergehenden Ansprüche, **dadurch gekennzeichnet, dass** sie eine Stabilität in Bezug auf Oxidation aufweist, welche höher ist als jene einer Beschichtung aus MCrAlY mit M = Ni und/oder Co und/oder Fe bei Temperaturen oberhalb von Raumtemperatur.

8. Legierung nach einem der vorhergehenden Ansprüche **gekennzeichnet durch** eine Wärmeleitfähigkeit bei Raumtemperatur von weniger als 6 Wm⁻¹K⁻¹.

9. Legierung nach einem der vorhergehenden Ansprüche **gekennzeichnet durch** eine Wärmeleitfähigkeit bei 1000°C von weniger als 15 Wm⁻¹K⁻¹.

10. Legierung nach einem der vorhergehenden Ansprüche **gekennzeichnet durch** einen Wärmeausdehnungskoeffizienten (CTE) von 10 - 20 · 10⁻⁶ K⁻¹, vorzugsweise von 14 - 17 · 10⁻⁶ K⁻¹ in einem Temperaturbereich von Raumtemperatur bis 1000°C.

11. Verfahren zur Herstellung einer Verbindung nach einem der Ansprüche 1 bis 10, **dadurch gekennzeichnet, dass** die Komponenten bevorzugt unter Schutzgas, insbesondere bevorzugt in einem Lichtbogen, zusammengeschmolzen werden und anschliessend bei bevorzugt wenigstens 900 Grad Celsius zu Gleichgewichtszustand getempert werden, insbesondere in einem isostatischen Hochdruckverfahren (HIP).

12. Verfahren nach Anspruch 11, **dadurch gekennzeichnet, dass** die Verbindung als Beschichtung auf einen Werkstoff aufgebracht wird, wobei insbesondere Verfahren wie Thermospray (APS, VPS, LPPS), Hochgeschwindigkeitsmethoden (HVOF) gefolgt von einem Tempern oder Elektroplating kombiniert mit einem Aluminisierungsprozess Anwendung finden.

13. Beschichtung aus einer multinären Legierung der Form:
AlₓNi_{y}Ru_{z}Mᵤ,
welche wenigstens eine B2-Phase aufweist,
wobei x, y, z, und u Atomprozente der Gesamtlegierung sind,
wobei x = 40 - 55; y = 10 - 50; z = 5 - 35; u = 5 -30;
und wobei M ein oder mehrere Metalle resp. Halbmetalle ausgewählt aus der Gruppe:
Ir, Pt, Rh, Pd, Cr, Fe, Co, Re, Ta, Ti, Zr, Hf, Y, Sc, Si, B Ist,
sowie ggf. vorhandene Verunreinigungen in niedrigen Anteilen..

14. Beschichtung nach Anspruch 13, **dadurch gekennzeichnet, dass** die Beschichtung auf einem Substrat aus einer Hochtemperaturstrukturmaterial, wie beispielsweise einem feuerfesten oder höchstschmelzenden Metall oder einer Superlegierung, welche bevorzugt nickel-, kobalt- und/oder eisenbasiert ist, aufgebracht ist.

15. Beschichtung nach einem der Ansprüche 13 oder 14, **dadurch gekennzeichnet, dass** eine multinäre Legierung nach einem der Ansprüche 1 bis 10 vorliegt, insbesondere bevorzugt in einer Dicke im Bereich von 300-1000µm oder sogar bis 2000 µm.

16. Beschichtung nach einem der Ansprüche 13 oder 14, **dadurch gekennzeichnet, dass** sie als Mehrschichtaufbau ausgebildet ist und dass zwischen der Superlegierung und der Schicht aus AlₓNi_{y}Ru_{z}Mᵤ vorzugsweise eine Haftschicht bevorzugt des Typs MCrAlY (BC) angeordnet ist, die Legierung des Typs Al-Ni-Ru-M mit einer Dicke im Bereich von 300 - 1000 µm und jene aus MCrAlY (BC) mit einer Dicke im Bereich von 30 - 300 µm aufgetragen ist, und optional auf dieser Schicht der Legierung eine weitere Schicht insbesondere aus Yttrium-stabilisiertem Zirkon (YSZ), bevorzugt mit einer Dicke im Bereich von 50 - 300 µm, angeordnet ist.

17. Beschichtung nach einem der Ansprüche 13 - 16, **dadurch gekennzeichnet, dass** auf der Schicht aus AlₓNi_{y}Ru_{z}Mᵤ eine keramische thermische Wärmedämmschicht , insbesondere auf Basis von Yttrium-stabilisiertem Zirkon, bevorzugt mit Säulenstruktur, angeordnet ist, und welche bevorzugt über APS oder EBPVD aufgetragen wurde.

18. Beschichtung nach einem der Ansprüche 13 - 17, **dadurch gekennzeichnet, dass** wenigstens eine Haftschicht des Typs MCrAlY (BC) angeordnet ist, welche wenigstens Ni, Co und/oder Fe enthält, und welche über APS, VPS oder HVOF aufgetragen worden ist.

19. Verwendung einer Legierung nach einem der Ansprüche 1 bis 10 bevorzugt hergestellt nach einem der Verfahren gem. Anspruch 11 oder 12 als Werkstoff für ein Bauteil, welches hohen Temperaturen ausgesetzt ist, und welches insbesondere heissen, ggf. korrosiven Gasen ausgesetzt ist respektive von heissen Gasen umströmt wird, wie beispielsweise für ein Bauteil einer Gasturbine oder eines Kompressors, insbesondere bevorzugt für eine Schaufel oder Leitschaufel einer Gasturbine oder eines Kompressors, insbesondere als Beschichtung nach einem der Ansprüche 13 - 18.

## Claims

1. Multinary alloy of the form:
AlₓNi_{y}Ru_{z}Mᵤ,
which includes at least one B2 phase,
where x, y, z and u are atomic percentages of the overall alloy,
where x=40-55;y=10-50;z=5-35;u=5-30;
and where M is at least one metal or semimetal selected from the group consisting of:
Ir, Pt, Rh, Pd, Cr, Fe, Co, Re, Ta, Ti, Zr, Hf, Y, Sc, Si, B,
and any impurities which may be present in small amounts.

2. Alloy according to Claim 1, **characterized in that** y=10-40,
and/or **in that** z=10-35,
and/or **in that** y+z=30-70, preferably y+z=35-55.

3. Alloy according to one of the preceding claims, **characterized**
**in that** if M=Co, u≤20,
**in that** if M=Ir,Pt,Rh,Pd, 5≤u≤10, preferably u=5,
**in that** if M=Cr, 5≤u≤15, preferably u=5-10,
**in that** if M=Fe, u=7-12,
**in that** if M=Zr,Hf, u=5,
**in that** if M=Si,B,Nb,Mo,W, u=5
**in that** if M=Re,Ti,5≤u≤10, preferably u=5,
**in that** if M=Ta, 5≤u≤20, preferably 5≤u≤10,
with the proviso that 0<u for at least one of the Ms.

4. Alloy according to one of the preceding claims, **characterized in that** it includes at least 30% by mass of at least one B2 structure, and **in that** it particularly preferably includes two different, thermodynamically stable phases of type B2.

5. Alloy according to one of the preceding claims, **characterized in that** M is selected from the group consisting of Cr,Ir,Si,Pt, **in that**
x=43-53, **in that** 5≤u≤20 and **in that**
y=30-45 if z=5-17, or **in that**
y=18-35 if z=17-35, or **in that**
y=5-18 if z=30-45.

6. Alloy according to one of the preceding claims, **characterized in that** M=Fe, and **in that** x=45-50, particularly preferably x=46, y=30-35, particularly preferably y=34, z=9-12, particularly preferably z=10 and u=8-12, particularly preferably u=10.

7. Alloy as claimed in one of the preceding claims, **characterized in that** it has a stability with respect to oxidation which is higher than that of a coating of MCrAlY with M=Ni and/or Co and/or Fe at temperatures above room temperature.

8. Alloy according to one of the preceding claims, **characterized by** a thermal conductivity at room temperature of less than 6 Wm⁻¹K⁻¹.

9. Alloy according to one of the preceding claims, **characterized by** a thermal conductivity at 1000°C of less than 15 Wm⁻¹K⁻¹.

10. Alloy according to one of the preceding claims, **characterized by** a coefficient of thermal expansion (CTE) of 10 - 20 · 10⁻⁶ K⁻¹, preferably of 14 - 17 · 10⁻⁶ K⁻¹ in a temperature range from room temperature to 1000°C.

11. Process for producing the compound according to one of Claims 1 to 10, **characterized in that** the components are melted together, preferably under shielding gas, particularly preferably in an arc, and are then annealed to the equilibrium state at preferably at least 900 degrees Celsius, in particular in a high isostatic pressure process (HIP).

12. Process according to Claim 11, **characterized in that** the compound is applied to a material as a coating, using in particular processes such as thermospraying (APS, VPS, LPPS), high-velocity methods (HVOF) followed by annealing or electroplating combined with an aluminizing process.

13. Coating formed from a multinary alloy of the form:
AlₓNi_{y}Ru_{z}Mᵤ,
which includes at least one B2 phase,
where x, y, z and u are atomic percentages of the overall alloy,
where x=40-55;y=10-50;z=5-35;u=5-30;
and where M is one or more metals or semimetals selected from the group consisting of:
Ir, Pt, Rh, Pd, Cr, Fe, Co, Re, Ta, Ti, Zr, Hf, Y, Sc, Si, B,
and any impurities which may be present in small amounts.

14. Coating according to Claim 13, **characterized in that** the coating is applied to a substrate made from a high-temperature structure material, such as for example a refractory or ultrahigh-melting metal or a superalloy, which is preferably based on nickel, cobalt and/or iron.

15. Coating according to Claim 13 or 14, **characterized in that** the multinary alloy according to one of Claims 1 to 10 is present, particularly preferably in a thickness in the range from 300-1000 µm or even up to 2000 µm.

16. Coating according to Claim 13 or 14, **characterized in that** it is formed as a multilayer structure, and **in that** a bond coat, preferably of type MCrAlY (BC), is preferably arranged between the superalloy and the layer of AlₓNi_{y}Ru_{z}Mᵤ, the alloy of type Al-Ni-Ru-M is applied with a thickness in the range from 300-1000 µm and that composed of MCrAlY (BC) is applied with a thickness in the range from 30 - 300 µm, and a further layer, in particular of yttrium-stabilized zirconium (YSZ), preferably with a thickness in the range from 50-300 µm, is optionally arranged on the said layer of the alloy.

17. Coating according to one of Claims 13 - 16, **characterized in that** a ceramic thermal barrier coating, in particular based on yttrium-stabilized zirconium, preferably with a columnar structure, and which has preferably been applied using APS or EBPVD, is arranged on the layer of AlₓNi_{y}Ru_{z}Mᵤ.

18. Coating according to one of Claims 13 - 17, **characterized in that** there is at least one bond coat of type MCrAlY (BC), which contains at least Ni, Co and/or Fe and has been applied by means of APS, VPS or HVOF.

19. Use of an alloy according to one of Claims 1 to 10, preferably produced by one of the processes according to Claims 11 or 12, as material for a component which is exposed to high temperatures and which is exposed to in particular hot, possibly corrosive gases and/or has hot gases flowing around it, such as for example for a component of a gas turbine or a compressor, particularly preferably for a blade or guide vane of a gas turbine or a compressor, in particular as a coating according to one of Claims 13 - 18.

## Revendications

1. Alliage multinaire de forme :
AlₓNi_{y}Ru_{z}Mᵤ
qui comporte au moins une phase B2,
x, y, z et u étant des pour cent en atomes de l'alliage total,
x valant 40 - 55 ; y valant 10 - 50 ; z valant 5 - 35 ;
u valant 5 - 30 ;
et M étant au moins un métal ou semi-métal, choisi dans le groupe :
Ir, Pt, Rh, Pd, Cr, Fe, Co, Re, Ta, Ti, Zr, Hf, Y, Sc, Si, B,
ainsi que des impuretés éventuellement présentes en faibles proportions.

2. Alliage selon la revendication 1, **caractérisé en ce que** y = 10 - 40,
et/ou **en ce que** z = 10 - 35,
et/ou **en ce que** y + z = 30 - 70, de préférence y + z = 35 - 55.

3. Alliage selon l'une quelconque des revendications précédentes, **caractérisé**
**en ce que** pour M = Co, u est ≤ 20,
**en ce que** pour M = Ir, Pt, Rh, Pd, 5 ≤ u ≤ 10, de préférence u = 5,
**en ce que** pour M = Cr, 5 ≤ u ≤ 15, de préférence u = 5 - 10,
**en ce que** pour M = Fe, u = 7 - 12,
**en ce que** pour M = Zr, Hf, u = 5,
**en ce que** pour M = Si, B, Nb, Mo, W, u = 5,
**en ce que** pour M = Re, Ti, 5 ≤ u ≤ 10, de préférence u = 5,
**en ce que** pour M = Ta, 5 ≤ u ≤ 20, de préférence 5 ≤ u ≤ 10,
étant entendu que 0 < u pour au moins l'un des M.

4. Alliage selon l'une quelconque des revendications précédentes, **caractérisé en ce qu'**il comporte au moins 30 % en masse d'au moins une structure B2, et **en ce qu'**il comporte en particulier de préférence deux phases du type B2 différentes, thermodynamiquement stables.

5. Alliage selon l'une quelconque des revendications précédentes, **caractérisé en ce que** M est choisi dans le groupe constitué par Cr, Ir, Si, Pt, **en ce que**
x = 43 - 53, **en ce que** 5 ≤ u ≤ 20 et **en ce que** y = 30 - 45 lorsque z = 5 - 17, ou respectivement **en ce que**
y = 18 - 35 lorsque z = 17 - 35, ou respectivement **en ce que**
y = 5 - 18 lorsque z = 30 - 45.

6. Alliage selon l'une quelconque des revendications précédentes, **caractérisé en ce que** M = Fe et **en ce que** x = 45 - 50, en particulier de préférence x = 46, y = 30 - 35, en particulier de préférence y = 34, z = 9 - 12, en particulier de préférence z = 10 et u = 8 - 12, en particulier de préférence u = 10.

7. Alliage selon l'une quelconque des revendications précédentes, **caractérisé en ce qu'**il a une stabilité vis-à-vis de l'oxydation qui est supérieure à celle d'un revêtement à base de MCrAlY où M = Ni et/ou Co et/ou Fe, à des températures supérieures à la température ambiante.

8. Alliage selon l'une quelconque des revendications précédentes, **caractérisé par** une conductivité thermique à la température ambiante de moins de 6 Wm⁻¹K⁻¹.

9. Alliage selon l'une quelconque des revendications précédentes, **caractérisé par** une conductivité thermique à 1 000 °C de moins de 15 Wm⁻¹K⁻¹.

10. Alliage selon l'une quelconque des revendications précédentes, **caractérisé par** un coefficient de dilatation thermique (CTE) de 10 - 20 . 10⁻⁶ K⁻¹, de préférence de 14 - 17. 10⁻⁶ K⁻¹ dans une plage de température allant de la température ambiante à 1 000 °C.

11. Procédé pour la préparation d'un composé selon l'une quelconque des revendications 1 à 10, **caractérisé en ce qu'**on fait fondre ensemble les composants de préférence sous gaz protecteur, de façon particulièrement préférée dans un arc électrique, et ensuite on les soumet à un traitement thermique à de préférence au moins 900 degrés Celsius, jusqu'à l'état d'équilibre, en particulier dans un procédé sous haute pression isostatique (HIP).

12. Procédé selon la revendication 11, **caractérisé en ce qu'**on applique le composé en tant que revêtement sur un matériau, en utilisant en particulier des procédés tels que thermospray (APS, VPS, LPPS), des procédés à grande vitesse (HVOF), suivis d'un traitement thermique ou d'un dépôt électrolytique associé à un processus d'aluminisation.

13. Revêtement à base d'un alliage multinaire de forme :
AlₓNi_{y}Ru_{z}Mᵤ
qui comporte au moins une phase B2,
x, y, z et u étant des pour cent en atomes de l'alliage total,
x valant 40 - 55 ; y valant 10 - 50 ; z valant 5 - 35 ; u valant 5 - 30 ;
et M consistant en un ou plusieurs métaux ou semi-métaux, choisis dans le groupe :
Ir, Pt, Rh, Pd, Cr, Fe, Co, Re, Ta, Ti, Zr, Hf, Y, Sc, Si, B,
ainsi que des impuretés éventuellement présentes en faibles proportions.

14. Revêtement selon la revendication 13, **caractérisé en ce que** le revêtement est appliqué sur un support à base d'un matériau de construction haute température, comme par exemple un métal réfractaire ou à très haut point de fusion ou un superalliage, qui est de préférence à base de nickel, cobalt et/ou fer.

15. Revêtement selon l'une quelconque des revendications 13 et 14, **caractérisé en ce qu'**est présent un alliage multinaire selon l'une quelconque des revendications 1 à 10, en particulier de préférence en une épaisseur dans la plage de 300 - 1 000 µm ou même jusqu'à 2 000 µm.

16. Revêtement selon l'une quelconque des revendications 13 et 14, **caractérisé en ce qu'**il est conçu sous forme de structure multicouche et **en ce qu'**entre le superalliage et la couche de AlₓNi_{y}Ru_{z}Mᵤ est disposée de préférence une couche d'adhérence de préférence du type MCrAlY (BC), l'alliage du type Al-Ni-Ru-M est appliqué en une épaisseur dans la plage de 300 - 1 000 µm et celui à base de MCrAlY (BC) est appliqué en une épaisseur dans la plage de 30 - 300 µm, et en option sur cette couche de l'alliage est disposée une autre couche en particulier à base de zirconium stabilisé avec de l'yttrium (YSZ), de préférence en une épaisseur dans la plage de 50 - 300 µm.

17. Revêtement selon l'une quelconque des revendications 13 à 16, **caractérisé en ce que** sur la couche de AlₓNi_{y}Ru_{z}Mᵤ est disposée une couche thermique d'isolation thermique céramique, en particulier à base de zirconium stabilisé avec de l'yttrium, de préférence à structure prismatique, et qui a été appliquée de préférence par APS ou EBPVD.

18. Revêtement selon l'une quelconque des revendications 13 à 17, **caractérisé en ce qu'**est disposée au moins une couche d'adhérence du type MCrAlY (BC), qui contient au moins du Ni, Co et/ou Fe, et qui a été appliquée par APS, VPS ou HVOF.

19. Utilisation d'un alliage selon l'une quelconque des revendications 1 à 10, de préférence préparé conformément à un procédé selon la revendication 11 ou 12, en tant que matériau pour une pièce de construction qui est exposée à de hautes températures, et qui en particulier est exposée à des gaz chauds, éventuellement corrosifs, ou est balayée par des gaz chauds, comme par exemple pour une pièce de construction d'une turbine à gaz ou d'un compresseur, en particulier de préférence pour une pale ou aube directrice d'une turbine à gaz ou d'un compresseur, en particulier en tant que revêtement selon l'une quelconque des revendications 13 à 18.
